# EUROPÄISCHE PATENTSCHRIFT

(11) **EP 0 481 955 B1**
(45) Veröffentlichungstag und Bekanntmachung des Hinweises auf die Patenterteilung: **11.01.1995**
(21) Anmeldenummer: 91890240.4
(22) Anmeldetag: 10.10.1991
(51) Int. Cl.: F23D 1/00, C10J 3/48

(54) **Brenner zur Verbrennung von feinkörnigen bis staubförmigen festen Brennstoffen**
Burner for the combustion of solid fuels of fine-grained to powdery consistency
Brûleur pour la combustion des combustibles solides à grains fins jusqu'aux combustibles solides pulvérulents

(30) Priorität: 15.10.1990 AT 2076/90
(43) Veröffentlichungstag der Anmeldung: 22.04.1992
(73) Patentinhaber: DEUTSCHE VOEST-ALPINE INDUSTRIEANLAGENBAU GMBH, 40094 Düsseldorf (DE)
(72) Erfinder: Kepplinger, Leopold-Werner, Dr. Dipl.-Ing., A-4060 Leonding (AT); Schiffer, Wilhelm, A-4050 Traun (AT); Hauk, Rolf, Dr. Dipl.-Ing., D-7590 Achern (DE)
(74) Vertreter: Wolfram, Gustav, Dipl.-Ing.

(56) Entgegenhaltungen:
- EP-A- 0 026 509
- EP-A- 0 107 225
- DE-A- 2 424 053
- DE-A- 3 206 074
- FR-A- 2 190 923
- FR-A- 2 445 364

## Beschreibung

Die Erfindung betrifft einen Brenner für die Verbrennung von feinkörnigen bis staubförmigen, festen Brennstoffen, insbesondere zum Einsatz in einem Einschmelzvergaser zur Herstellung von flüssigem Roheisen oder Stahlvorprodukten, mit einem zentralen Innenrohr zur Zuführung des festen Brennstoffes und einem das zentrale Innenrohr umgebenden, von einem gekühlten Außenrohr begrenzten Ringspalt zur Zuführung von Sauerstoff bzw. sauerstoffhältigem Gas, wobei der Ringspalt mit einer schräg gegen die Längsachse des Brenners gerichteten und das Ende des zentralen Innenrohres peripher umgebenden Ausströmöffnung oder mit einer Vielzahl ringförmig um die Längsachse des Brenners angeordneten Ausströmöffnungen nach außen mündet.

Ein Brenner dieser Art ist aus der EP-A - 0 347 002 bekannt. Der Sauerstoff wird bei diesem Brenner in einem Winkel zwischen 20 und 60° dem zentral in Achsrichtung des Brenners eingeblasenen festen Brennstoffen zugeführt. Hierdurch ergibt sich eine Turbulenz und eine innige Vermischung des Sauerstoffes mit dem feinteiligen festen Brennstoff. Dies hat den Nachteil, daß infolge der wesentlich schnelleren Verbrennungsgeschwindigkeit von den Brenner bzw. den Brennstrahl außen umgebenden brennbaren Gasen gegenüber feinteiligem bis staubförmigem Brennstoff ein schlechter Ausbrand des zugeführten feinteiligen bis staubförmigen Brennstoffes stattfindet.

Der bekannte Brenner weist weiters den Nachteil auf, daß es unmittelbar nach Austritt der feinteiligen Brennstoffe aus dem zentralen Innenrohr zu einer Durchwirbelung mit dem Sauerstoff kommt, so daß ein Brennfleck gebildet wird, der unmittelbar am Brennermund liegt. Die hierdurch anfallende hohe thermische Belastung des Brennermundes führt trotz Wasserkühlung des Brennermundes zu einem starken Verschleiß, so daß der Brenner selbst nur eine kurze Standzeit aufweist.

Die FR-A-2 445 364 zeigt einen ähnlichen Brenner, wo jedoch lediglich drei Ausströmöffnungen vorhanden sind.

Die Erfindung bezweckt die Vermeidung dieser Nachteile und Schwierigkeiten und stellt sich die Aufgabe, einen Brenner der eingangs beschriebenen Art zu schaffen, der nicht nur eine vollständige Verbrennung des zugeführten feinkörnigen bis staubförmigen festen Brennstoffes erlaubt, sondern zudem auch eine hohe Standzeit aufweist. Insbesondere soll es mit dem Brenner möglich sein, bei der Herstellung von flüssigem Roheisen oder Stahlvorprodukten in einem Einschmelzvergaser die im aus dem Einschmelzvergaser austretenden Reduktionsgas enthaltenen und aus diesem abgeschiedenen Kohleteilchen in den Einschmelzvergaser rückzuführen und dort zu verbrennen. Ein verfahren zur Rückführung dieser Kohleteilchen ist beispielsweise in der AT-B - 381.116 beschrieben.

Diese Aufgabe wird erfindungsgemäß dadurch gelöst, daß die Neigung der Ausströmöffnung(en) gegenüber der Längsachse des Brenners unter 20° liegt und die Ausströmöffnung(en) quer zur Längsachse des Brenners und in radialer Richtung zu dieser in einer Distanz zwischen 5 und 30 mm von der Innenwandung des zentralen Innenrohres entfernt angeordnet ist (sind), wobei die Neigung der Ausströmöffnung(en) zur Längsachse des Brenners und die radiale Distanz der Ausströmöffnung(en) zur Innenwandung des zentralen Innenrohres derart aufeinander abgestimmt sind, daß die Schnittstelle der Verlängerung der Ausströmöffnung mit der Verlängerung der Innenwandung des Innenrohres außerhalb des Brenners in einem Abstand von 20 bis 80 mm, vorzugsweise in einem Abstand von 30 bis 60 mm, vor dem Brennermund liegt.

Ein Brenner dieser Art ermöglicht infolge geringer Wirbelbildung des Sauerstoffstrahles die Ausbildung eines den Sauerstoffstrahl außen umgebenden Schutzmantels aus inerten Verbrennungsgasen, so daß der Sauerstoff für eine vollständige Verbrennung der feinkörnigen bis staubförmigen festen Brennstoffe zur Verfügung steht. Zudem findet das Aufeinandertreffen von Sauerstoff mit diesen Brennstoffen im Abstand von der Brennermündung statt, so daß die thermische Belastung des Brennermundes nicht allzu hoch ist und die entstehende Wärme, ohne eine Beschädigung des Brennermundes bzw. einen zu starken Verschleiß des Brennermundes zu verursachen, mit Hilfe der Kühlung des Außenrohres abgeführt werden kann.

Weisen die zu verbrennenden feinkörnigen bis staubförmigen festen Brennstoffe eine höhere Temperatur auf, ist zweckmäßig das Innenrohr mit einer Innenkühlung versehen.

Eine weitere Erhöhung der Standzeit des Brenners wird zweckmäßig dadurch erzielt, daß das Innenrohr außenseitig aus Kupfer oder einer Kupferlegierung gebildet ist und innenseitig aus verschleißfestem Stahl gefertigt ist, wobei zusätzlich vorteilhaft das wassergekühlte Außenrohr außenseitig aus Kupfer oder einer Kupferlegierung gebildet ist und innenseitig aus verschleißfestem Stahl gefertigt ist.

In der Praxis hat sich insbesondere eine Ausführungsform bewährt, bei der die Neigung der Ausströmöffnung(en) zur Längsachse des Brenners etwa 12,5° beträgt.

Eine weitere bevorzugte Ausführungsform ist dadurch gekennzeichnet, daß an der Mündung des Innenrohres ein Drallstück vorgesehen ist, wobei das Drallstück vorteilhaft von einem in das Innenrohr eingesetzten Rohrstück gebildet ist, an dessen Innenwand schraubenartige Nuten angeordnet sind. Hierdurch kommt es infolge der Zentrifugalkraft zu einer intensiveren Vermischung des an der Innenseite des rohrförmigen Sauerstoffstrahles vorhandenen Sauerstoffes mit den zentral zugeführten feinteiligen bis staubförmigen festen Brennstoffen, ohne daß jedoch der den Sauerstoffstrahl außen umgebende CO₂-Schutzmantel zerstört bzw. aufgelöst wird.

Die Erfindung ist nachfolgend anhand der Zeichnung an zwei Ausführungsformen näher erläutert, wobei die Fig. 1 und 2 jeweils einen Axialschnitt durch das vordere Ende des Brenners nach jeweils einer Ausführungsform veranschaulichen. Fig. 3 ist eine gemäß der Linie III-III geführte Schnittdarstellung.

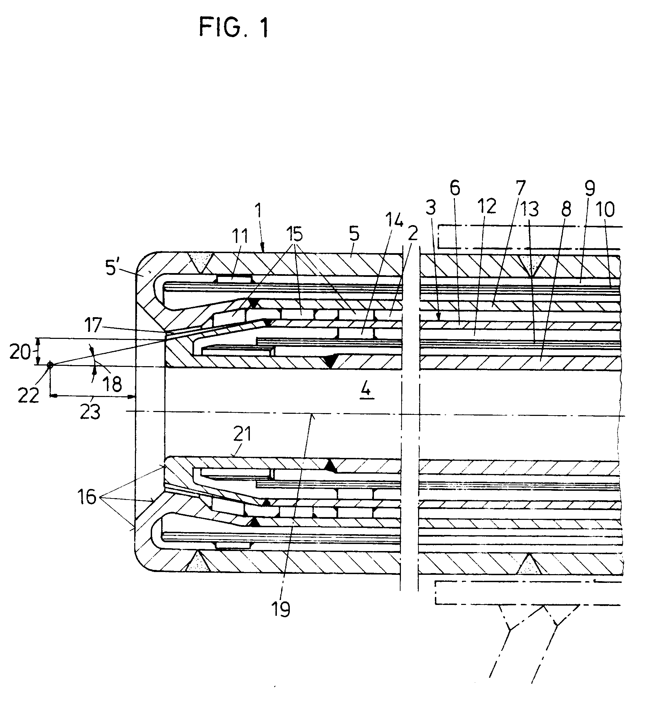

Der in Fig. 1 dargestellte Brenner weist ein mit einer Wasserinnenkühlung versehenes doppelwandiges Außenrohr 1 auf, in dem unter Freilassung eines im Querschnitt kreisringförmigen Ringspaltes 2 ein Innenrohr 3, welches ebenfalls doppelwandig ausgebildet und mit einer Wasserinnenkühlung versehen ist, eingesetzt ist.

Der vom Innenrohr 3 eingeschlossene Kanal 4 mit Kreisquerschnitt dient zur Zuführung von feinkörnigen bis staubförmigen festen Brennstoffen, wogegen der zwischen Außen- 1 und Innenrohr 3 liegende Ringspalt 2 zur Zuführung von Sauerstoff bzw. sauerstoffhältigem Gas dient. Sowohl das Außen- 1 als auch das Innenrohr 3 sind jeweils außenseitig von einem Kupferrohr 5 bzw. 6 gebildet. Innenseitig ist sowohl beim Außenrohr 1 als auch beim Innenrohr 3 ein Mantelrohr 7 bzw. 8 aus verschleißfestem Stahl, wie z.B. Federstahl, vorgesehen.

Der Außenmantel des Außenrohres 1, der von dem Kupferrohr 5 (oder einer Kupferlegierung) gebildet ist, schließt an ein U-förmig gebogenes Mündungsstück 5' an, welches ebenfalls aus Kupfer oder einer Kupferlegierung besteht. Dieses Mündungsstück 5' reicht innenseitig des Außenrohres 1 bis in den Ringspalt 2 zwischen Außen- 1 und Innenrohr 3, wo das aus verschleißfestem Stahl gebildete innere Mantelrohr 7 des Außenrohres 1 anschließt.

Im Innenraum 9 des Außenrohres 1 ist zur Führung und Umlenkung des Kühlwassers ein rohrförmiger Einsatz 10 vorgesehen, der über Distanzstücke 11 in Position gehalten ist. Im Inneren 12 des Innenrohres 3 ist ebenfalls ein Rohr 13 zur Umlenkung des Kühlwassers eingebaut, welches sich ebenfalls über Distanzstücke 14 am Innenrohr 3 abstützt, damit es in richtiger Position gehalten ist. In dem Ringspalt 2 zwischen Innen- 3 und Außenrohr 1 sind zur Einstellung einer zentralen Lage des Innenrohres 3 gegenüber dem Außenrohr 1 Distanzstücke 15 angeordnet.

Von besonderer Bedeutung ist die Ausbildung der Brennermündung 16, insbesondere die Mündung 17 des Ringraumes 2 zwischen Innen- 3 und Außenrohr 1 nach außen. Gemäß Fig. 1 ist die Mündung 17 als ringspalt- und kegelförmige Ausströmöffnung ausgebildet, wobei die Neigung 18 der Ausströmöffnung 17 gegenüber der Längsachse 19 des Brenners, also der halbe Öffnungswinkel des von der Ausströmöffnung 17 gebildeten Kegels, weniger als 20° und mehr als 5°, vorzugsweise und wie in Fig. 1 dargestellt 12,5° beträgt. Anstelle der ringspaltförmigen Ausströmöffnung 17 können auch mehrere Ausströmöffnungen, die ringförmig um die Längsachse 19 des Brenners angeordnet sind, vorgesehen sein.

Weiters ist das Innenrohr 3 an seinem vorderen Ende abgeplattet, wodurch sich eine radiale Distanz 20 zwischen der Innenwandung 21 des Innenrohres 3 und der Ausströmöffnung 17 ergibt. Diese Distanz liegt zweckmäßig zwischen 5 und 30 mm.

Die Neigung 18 der Ausströmöffnung 17 zur Längsachse 19 des Brenners ist zur radialen Distanz 20 der Ausströmöffnung 17 zur Innenwandung 21 des Innerohres 3 derart abgestimmt, daß die Schnittstelle 22 der Verlängerung der Ausströmöffnung 17 mit der Verlängerung der Innenwandung 21 des Innenrohres 3 außerhalb des Brennermundes 16 in einem Abstand 23 von 20 bis 80 mm, vorzugsweise in einem Abstand von 30 bis 60 mm, vor dem Brennermund 16 liegt.

Die Funktion des Brenners ist folgende:
Der bevorzugte Einsatz des Brenners ist der Einsatz in einem Einschmelzvergaser zur Herstellung von flüssigem Roheisen oder Stahlvorprodukten. Ein solcher Einschmelzvergaser ist beispielsweise in der AT-B - 381.116 beschrieben. Mit dem Brenner ist es möglich, Kohleteilchen, die aus dem vom Einschmelzvergaser abgeleiteten Reduktionsgas abgeschieden sind, wieder dem Einschmelzvergaser zuzuführen und vollständig zu verbrennen.

Die oben beschriebene besondere Ausbildung der Ausströmöffnung 17 und Ausbildung des vorderen Endes des Innenrohres 3 bewirkt, daß ein Zusammentreffen bzw. Vermischen des sich außerhalb des Brenners bildenden rohrförmigen Sauerstoffstrahles mit dem Brennstoffstrahl erst im Abstand 23 von der Brennermündung 16 bildet, so daß die Brennermündung 16 nur einer thermischen Beanspruchung ausgesetzt ist, der sie auch über längere Zeit standhalten kann.

Die geringe Neigung 18 der Ausströmöffnung 17 zur Längsachse 19 des Brenners bewirkt, daß nur geringe Wirbelbildungen im Sauerstoffstrahl entstehen. Dies hat zur Folge, daß der Sauerstoffstrahl außenseitig von einem CO₂-Schutzmantel umgeben ist, der sich dadurch bildet, daß das im Inneren des Einschmelzvergasers vorhandene CO mit dem Sauerstoff des Sauerstoffstrahles zu CO₂ reagiert, u.zw. nach der Gleichung

2CO + O₂→2CO₂.

Dieser CO₂-Schutzmantel ist von Bedeutung, um eine endotherme Reaktion nach Boudouard des CO₂ mit Kohlenstoff unter Wärmeverbrauch zu CO zu unterbinden, u.zw. nach der Gleichung

CO₂ + C→2CO.

Eine solche Reaktion ist unerwünscht, da sie im Einschmelzvergaser vorhandene Wärme verbrauchen würde und das entstehende kalte CO nicht ausreichen würde, um alle erforderlichen Reaktionen im Einschmelzvergaser durchführen zu können, wie z.B. das Einschmelzen der Kohlenasche und das Einschmelzen der im Brennstoffstrahl enthaltenen Feststoffpartikel.

Der im Brennstoffstrahl enthaltene Brennstoff reagiert mit dem Sauerstoff des Sauerstoffstrahles nach der Gleichung

C + O₂→CO₂,

welche Reaktion zwar wesentlich langsamer abläuft als die Reaktion des im Einschmelzvergaser vorhandenen CO mit Sauerstoff zu CO₂, was jedoch infolge des CO₂-Schutzmantels keine Rolle spielt.

Der CO₂-Schutzmantel verhindert, daß CO aus der Ofenatmosphäre in den Bereich des Brenners nach- bzw. eindiffundieren kann und sichert die vollständige Verbrennung des Brennstoffes des Brennstoffstrahles.

Hierdurch gelingt es, die Aschepartikel vollständig aufzuschmelzen. Weiters ist es möglich, im Brennstoffstrahl vorhandene Eisenschwammpartikel und Eisenstaubpartikel auf Schmelztemperatur zu bringen, so daß sie in feine Tröpfchen übergehen. Hiermit wird eine Staubanreicherung innerhalb des Einschmelzvergasers, die unter Umständen sogar zu einer Verstopfung des Reduktionsschachtes des Einschmelzvergasers führen könnte, zuverlässig vermieden.

Das Aufschmelzen der Eisenschwammpartikel bzw. der Eisenstaubpartikel, die im Brennstoffstrahl vorhanden sind, ergibt zudem eine besonders effiziente Arbeitsweise des Einschmelzvergasers mit einer hohen Ausbeute an flüssigem Roheisen oder Stahlvorprodukten.

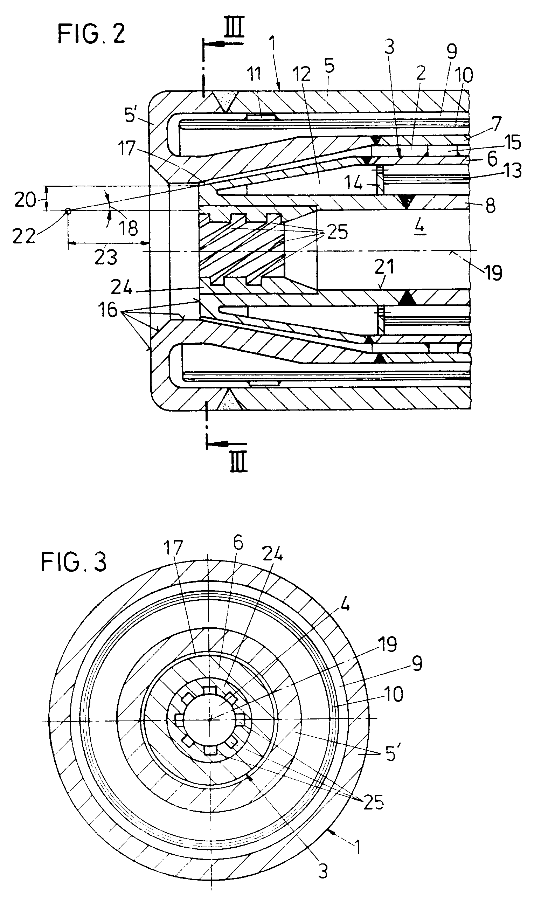

Die in Fig. 2 dargestellte Ausführungsform entspricht, was die Gestaltung des Innenrohres 3, des Außenrohres 1 und der Ausströmöffnung 17 betrifft, in etwa der in Fig. 1 dargestellten Ausführungsform.

Im Kanal 4 des Innenrohres 3 ist jedoch ein kreisringzylindrisches Drallstück 24 eingesetzt, welches mit der Stirnfläche des Innenrohres 3 bündig abschließt und am entgegengesetzten Ende sich unter einem spitzen Winkel verjüngend ausgebildet ist. An der Innenseite dieses Drallstückes sind schraubenförmige Nuten 25 eingearbeitet. Durch diese Nuten 25 erhält der Brennstoffstrom einen Drall um die Längsachse 19 des Brenners. Dieser Drall bewirkt durch die dabei hervorgerufene Zentrifugalkraft eine Verwirbelung des Brennstoffes mit dem an der Innenseite des Sauerstoffstrahles vorhandenen Sauerstoff, wogegen die Außenseite des Sauerstoffstrahles relativ unverwirbelt bleibt und damit den Fortbestand der CO₂-Schutzschicht sichert.

Der durch die Wandstärke des Drallstückes verursachten Verbreiterung der Stirnfläche des Innenrohres 3 kann dadurch Rechnung getragen werden, daß das Innenrohr 3 um einen etwas größeren Abstand von der Stirnfläche des Außenrohres 1 nach innen versetzt ist.

## Patentansprüche

1. Brenner für die Verbrennung von feinkörnigen bis staubförmigen, festen Brennstoffen, insbesondere zum Einsatz in einem Einschmelzvergaser zur Herstellung von flüssigem Roheisen oder Stahlvorprodukten, mit einem zentralen Innenrohr (3) zur Zuführung des festen Brennstoffes und einem das zentrale Innenrohr (3) umgebenden, von einem gekühlten Außenrohr (1) begrenzten Ringspalt (2) zur Zuführung von Sauerstoff bzw. sauerstoffhältigem Gas, wobei der Ringspalt (2) mit einer schräg gegen die Längsachse (19) des Brenners gerichteten und das Ende des zentralen Innenrohres (3) peripher umgebenden Ausströmöffnung (17) oder mit einer Vielzahl ringförmig um die Längsachse (19) des Brenners angeordneten Ausströmöffnungen (17) nach außen mündet, dadurch gekennzeichnet, daß die Neigung (18) der Ausströmöffnung(en) (17) gegenüber der Längsachse (19) des Brenners unter 20° liegt und die Ausströmöffnung(en) quer zur Längsachse des Brenners und in radialer Richtung zu dieser in einer Distanz (20) zwischen 5 und 30 mm von der Innenwandung (21) des zentralen Innenrohres (3) entfernt angeordnet ist (sind), wobei die Neigung (18) der Ausströmöffnung(en) (17) zur Längsachse (19) des Brenners und die radiale Distanz (20) der Ausströmöffnung(en) (17) zur Innenwandung (21) des zentralen Innenrohres derart aufeinander abgestimmt sind, daß die Schnittstelle (22) der Verlängerung der Ausströmöffnung (17) mit der Verlängerung der Innenwandung (21) des Innenrohres (3) außerhalb des Brenners in einem Abstand (23) von 20 bis 80 mm, vorzugsweise in einem Abstand (23) von 30 bis 60 mm, vor dem Brennermund (16) liegt.

2. Brenner nach Anspruch 1, dadurch gekennzeichnet, daß das Innenrohr (3) mit einer Innenkühlung versehen ist.

3. Brenner nach Anspruch 2, dadurch gekennzeichnet, daß das Innenrohr (3) außenseitig aus Kupfer oder einer Kupferlegierung gebildet ist und innenseitig aus verschleißfestem Stahl gefertigt ist.

4. Brenner nach einem oder mehreren der Ansprüche 1 bis 3, dadurch gekennzeichnet, daß daswassergekühlte Außenrohr (1) außenseitig aus Kupfer oder einer Kupferlegierung gebildet ist und innenseitig aus verschleißfestem Stahl gefertigt ist.

5. Brenner nach einem oder mehreren der Ansprüche 1 bis 4, dadurch gekennzeichnet, daß die Neigung (18) der Ausströmöffnung(en) (17) zur Längsachse (19) des Brenners 12,5° beträgt.

6. Brenner nach einem oder mehreren der Ansprüche 1 bis 5, dadurch gekennzeichnet, daß an der Mündung (16) des Innenrohres (3) ein Drallstück (24) vorgesehen ist (Fig. 2, 3).

7. Brenner nach Anspruch 6, dadurch gekennzeichnet, daß das Drallstück von einem in das Innenrohr (3) eingesetzten Rohrstück gebildet ist, an dessen Innenwand schraubenartige Nuten (25) angeordnet sind.

## Claims

1. A burner for the combustion of fine-grained to dusty solid fuels, in particular for use in a meltdown gasifier for the production of molten pig iron or steel pre-products, comprising a central internal tube (3) for supplying the solid fuel and an annular gap (2) surrounding the central internal tube (3) and delimited by a cooled external tube (1), for supplying oxygen or oxygen-containing gas, which annular gap (2) ends externally by an exhaust port (17) directed obliquely relative to the longitudinal axis (19) of the burner and peripherally surrounding the end of the central internal tube (3), or by a plurality of exhaust ports (17) annularly disposed about the longitudinal axis (19) of the burner, characterised in that the inclination (18) of the exhaust port(s) (17) relative to the longitudinal axis (19) of the burner is below 20° and that the exhaust port(s) is (are) arranged transverse to the longitudinal axis of the burner and in the radial direction relative to the same at a distance (20) of between 5 and 30 mm from the inner wall (21) of the central internal tube (3), wherein the inclination (18) of the exhaust port(s) (17) relative to the longitudinal axis (19) of the burner and the radial distance (20) of the exhaust port(s) (17) relative to the inner wall (21) of the central internal tube are coordinated in a manner that the intersection (22) of the extension of the exhaust port (17) with the extension of the inner wall (21) of the internal tube (3) outside of the burner is located in front of the burner mouth (16) at a distance (23) of from 20 to 80 mm, preferably at a distance (23) of from 30 to 60 mm.

2. A burner according to claim 1, characterised in that the internal tube (3) is provided with an internal cooling.

3. A burner according to claim 2, characterised in that the internal tube (3) is formed of copper or a copper alloy on its outer side and of wear-resisting steel on its inner side.

4. A burner according to one or several of claims 1 to 3, characterised in that the water-cooled external tube (1) is formed of copper or a copper alloy on its outer side and of wear-resisting steel on its inner side.

5. A burner according to one or several of claims 1 to 4, characterised in that the inclination (18) of the exhaust port(s) (17) relative to the longitudinal axis (19) of the burner amounts to 12.5°.

6. A burner according to one or several of claims 1 to 5, characterised in that a spin piece (24) is provided at the mouth (16) of the internal tube (3) (Figs. 2, 3).

7. A burner according to claim 6, characterised in that the spin piece is formed by a tube section inserted in the internal tube (3), on whose inner wall helical grooves (25) are provided.

## Revendications

1. Brûleur pour la combustion des combustibles solides à grains fins jusqu'aux combustibles solides pulvérulents, destiné en particulier à être utilisé dans un gazéificateur de fusion pour la production de fonte brute ou de précurseurs de l'acier, comportant un tube interne central (3) pour l'introduction du combustible solide et un passage annulaire (2) qui entoure le tube interne central (3) et qui est limité par un tube externe refroidi (1), pour l'introduction d'oxygène ou d'un gaz: contenant de l'oxygène, le passage annulaire (2) débouchant vers l'extérieur par une ouverture d'émission (17) dirigée obliquement par rapport à l'axe longitudinal (19) du brûleur et entourant de manière périphérique l'extrémité du tube interne central (3) ou par une multiplicité d'ouvertures d'émission (17) disposées de manière annulaire autour de l'axe longitudinal (19) du brûleur, caractérisé en ce que l'inclinaison (18) de la ou des ouvertures d'émission (17) par rapport à l'axe longitudinal (19) du brûleur est inférieure à 20° et la ou les ouvertures d'émission est ou sont agencées obliquement par rapport à l'axe longitudinal du brûleur et en direction radiale par rapport à celui-ci à une distance (20) comprise entre 5 et 30 mm de la paroi interne (21) du tube interne central (3), l'inclinaison (18) de la ou des ouvertures d'émission (17) par rapport a l'axe longitudinal (19) du brûleur et la distance radiale (20) de la ou des ouvertures d'émission (17) par rapport à la paroi interne (21) du tube interne central concordant mutuellement de telle manière que le point d'intersection (22) du prolongement de l'ouverture d'émission (17) et du prolongement de la paroi interne (21) du tube interne (3) à l'extérieur du brûleur est situé à une distance (23) de 20 à 80mm, de préférence à une distance (23) de 30 à 60mm, de l'orifice (16) du brûleur.

2. Brûleur selon la revendication 1, caractérisé en ce que le tube interne (3) est muni d'un refroidissement interne.

3. Brûleur selon la revendication 2, caractérisé en ce que le tube interne (3) est constitué du côté externe par du cuivre ou un alliage du cuivre et du côté interne par de l'acier résistant à l'usure.

4. Brûleur selon une ou plusieurs des revendications 1 à 3, caractérisé en ce que le tube externe (1) refroidi par de l'eau est constitué du côté externe par du cuivre ou un alliage du cuivre et du côté interne par de l'acier résistant à l'usure.

5. Brûleur selon une ou plusieurs des revendications 1 à 4, caractérisé en ce que l'inclinaison (18) de la ou des ouvertures d'émission (17) par rapport à l'axe longitudinal (19) du brûleur est de 12,5°.

6. Brûleur selon une ou plusieurs des revendications 1 à 5, caractérisé en ce qu'un organe de torsion (24) est prévu au niveau de l'embouchure (16) du tube interne (3) (figures 2,3).

7. Brûleur selon la revendication 6, caractérisé en ce que l'organe de torsion est constitué par un organe tubulaire inséré dans le tube interne (3), sur la paroi interne duquel sont disposées des gorges hélicoïdales (25).
